Europäisches Patentamt

European Patent Office

Office européen des brevets

(11) Publication number: **0 446 630 A2**

# EUROPEAN PATENT APPLICATION

(21) Application number: **91101997.4**

(22) Date of filing: **13.02.91**

(30) Priority: **12.03.90 US 491900**

(43) Date of publication of application:
**18.09.91 Bulletin 91/38**

(84) Designated Contracting States:
**DE FR GB**

(71) Applicant: **International Business Machines Corporation**
**Old Orchard Road**

(51) Int. Cl.⁵: **G06K 9/34**

**Armonk, N.Y. 10504(US)**

(72) Inventor: **Norton, Henry Theodore**
**8720 High Ridge Lane**
**Concord, N.C. 28025(US)**

(74) Representative: **Jost, Ottokarl, Dipl.-Ing.**
**IBM Deutschland GmbH Patentwesen und**
**Urheberrecht Schönaicher Strasse 220**
**W-7030 Böblingen(DE)**

(54) Method and apparatus for segmenting characters in an amount field on a financial document.

㊷ A method and apparatus for segmenting character images in an optical recognition system wherein the character images represent an amount field. The segmentation is accomplished by identifying contiguous areas of black, representing connected portions or lines. The system attempts to recognize the contiguous areas, and if this is not successful either combines (50) an area of contiguous black with an adjacent (but separate) second contiguous black area or separates (64) the contiguous area into two regions and then tries to recognize them. A set of rules is provided which includes discarding fraction bars, material under the fraction bars (such as the numeral "100") and other techniques to isolate the image of the individual amount numerals and decimal from extraneous material to allow for recognition processing or operator entry of the amount into a memory associated with the document.

Fig. 2.

BEGIN SEGMENTATION — 40

IDENTIFY ALL SEGMENTS — 42

DISCARD PERIPHERAL NOISE — 44

LOCATE FRACTION LINE, IF ANY — 46

LOCATE DECIMAL POINT — 48

COMBINE SMALL SEGMENTS WITH NEARBY LARGER SEGMENTS — 50

ATTEMPT RECO OF PROBABLE CHARACTER (EACH SEGMENT) — 52

RECO SUCCESSFUL ? — 54
TRUE
FALSE — 62

IS SPLITTING POSSIBLE ? — 64
FALSE
TRUE

SPLIT THE CHARACTER

LAST CHARACTER ? — 56
TRUE — EXIT — 58
FALSE

NEXT CHARACTER — 60

## BACKGROUND OF THE INVENTION

### Field of the Invention

This invention relates to the field of character recognition, and, more particularly to the segmentation of a line of characters into individual characters which each can be recognized. That is, the segmentation is dividing a field of a plurality of horizontally-adjacent characters into individual sections or segments which then can be recognized by a character recognition algorithm.

### Background Art

The first step in recognizing characters in an optical character recognition system is to identify a region (a polygon around a character) in which one and only one character exists. This process has been referred to as "segmentation" of characters in an image field.

Segmenting of characters has become of added value as systems for capturing detailed images have become more desirable. Additionally, as imaging becomes more common, systems for identifying characters are becoming more popular, and the recognition process works best generally when it attempts to recognize only a single character at a time.

U.S. Patent 4,562,594 is directed to one method of segmenting characters. The techniques disclosed in that patent assume that the characters are positioned on a standard or predetermined pitch or spacing between adjacent characters and uses a regression technique for locating the centers of the boxes that allow the image of a plurality of characters to be segmented into individual character segments.

U.S. Patent 4,611,346 describes segmentation techniques for recognition of characters including diacritical marks. In addition to using natural segmentation boundaries, expansion or contraction of boundaries is described in this system.

U. S. Patent 3,526,876 segments characters by using pairs of adjacent characters to determine a pitch or spacing between characters. Then each character space is segmented into individual areas for recognition.

U. S. Patent 4,045,773 is yet another technique for segmenting characters. This system adjusts segmentation boundaries based upon whether or not a character is within a character frame. The size of the character is used to consider combining adjacent patterns or rejecting a pattern as noise.

U. S. Patent 4,493,108 to Fryer et al. shows a method of cutting video image fields in an optical document reading system. However, this system locates fields of interest, not indicated characters.

A prior art technique of segmenting characters based upon finding a discontinuity region (or a blank vertical band) has also been suggested. This system may fail when a single character has been written with a break in the writing, or for some other reason, the system detects a break, as for example, where the ink has been obscured for one reason or another. An example is a handwritten "5" in which the horizontal top might be unconnected with the remainder of the character.

Segmentation of an amount written by hand on a check or other financial document might include a very small, yet important, element such as a decimal point which separates dollars from cents. It is apparent that this decimal point should be located and identified. Conversely, a very large symbol on a handwritten amount may be substantially meaningless, such as a fraction bar, together with matter under it (such as "100" or "xx") which are best discovered before recognition.

Accordingly, the prior art systems for segmenting characters have limitations and disadvantages.

## SUMMARY OF THE INVENTION

The present invention overcomes the limitations and disadvantages of the prior art segmentation techniques used in recognition of character patterns for optical character recognition algorithms. This invention includes both a trial segmentation based upon determining contiguous black areas, or continuous images, then, beginning with the largest segments, adjacent small segments are combined. This segmentation is confirmed by attempting to recognize the images between white areas completely separating adjacent black areas. If this image cannot be recognized as a known character in a stored character set using a conventional character recognition technique, then further processing attempts to divide the image into smaller areas which can be recognized.

The present invention also includes a plurality of segmentation rules or techniques to assist in the process.

The present invention has the advantageous feature of locating a "fraction line" in a handwritten amount field.

The fraction line, if it exists, is identified and discarded before further segmenting of the characters. Also discarded as unnecessary (and potentially misleading) are characters (such as "100") which are "under" the fraction bar.

The present invention also takes into account the slope with which many characters are written. While some writing is substantially vertical, a slope where the upper part of a character leans toward the right from the vertical is more common. Accordingly, in attempting to segment a character, white space through adjacent elements with a right inclination of about 26.5 degrees is tested.

The present invention gives preference to combining low short segments with a prior segment, while the preferred combining of high short segments is with subsequent adjacent segments except for the tail of "5's" which are combined with the prior segments.

The present invention seeks to locate and preserve decimal points in amount fields because of the inherent place value setting of it. The decimal point is also used in the present invention as a divider across which no segments are combined.

Other objects and advantages of the present invention will be apparent to those skilled in the art of character recognition.

BRIEF DESCRIPTION OF THE DRAWINGS

Figure 1 illustrates an organizational diagram of an image capture and processing system useful in connection with the present invention.

Figure 2 is a logic diagram useful in performing a segmentation method of the present invention using the image capture system of Figure 1.

Figures 3 - 6 illustrate various amount fields captured in an image system of Figure 1 and applying the logic diagrams of Figure 2.

DETAILED DESCRIPTION OF THE PREFERRED EMBODIMENT

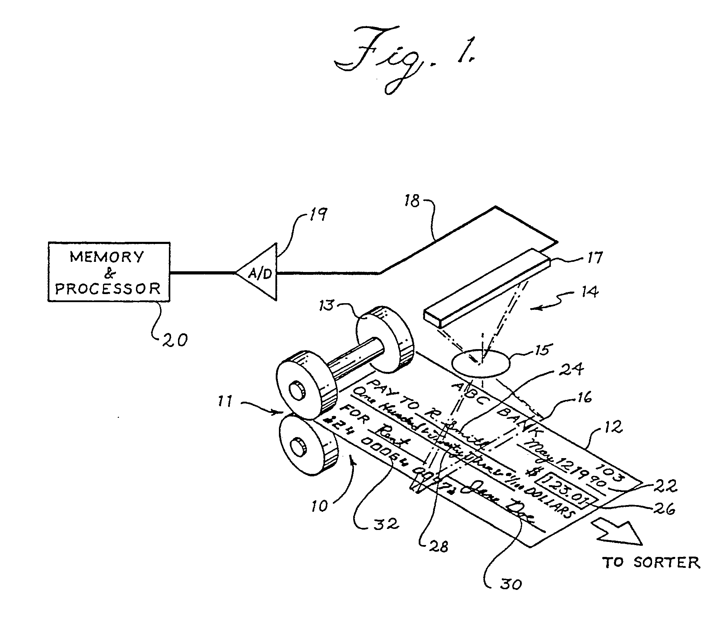

Figure 1 illustrates an image capture system 10 within a document image processing system 11, such as IBM's Model 3890 Image Plus High Performance Transaction System. Such a system typically uses a transport 13 to move a document 12 one at a time from an input hopper (not shown) sequentially past a plurality of other processing stations and finally into one of several output hoppers or pockets, based usually upon the information content read from the document under program control as it passes. This transport moves the document at a high speed (over 300 inches per second in a Model 3890 which allows the system to process 2400 documents per minute).

An optical system 14 including a focusing lens 15 uses an extended array 17 to capture an electrical representation of each line 16 of the document, based on either the black/white or gray characteristics of the document. While the resolution of the system depends on the design and components, one example divides each inch into 240 picture elements (pels or pixels) in each of the horizontal and vertical directions.

The array 17 is commercially available from various manufacturers, such as Reticon, and may be a charge coupled device in which the impinging light on each sensor develops an electrical signal proportional to the amount of light. The electrical signals pass on line 18 to an analog-to-digital converter 19, which together with threshholding, converts each pel into a digital representation, which is then stored in memory 20 for storage and/or further processing as desired. For further details of an image capture and processing system, see U.S. Patent 4,888,812 to Dinan et al., which is specifically incorporated herein by reference.

The document 12 includes a variety of indicia, some of which may be printed and some may be handwritten.

Other documents may include typewritten characters or those printed by machine. This indicia includes a date field 22, a payee line 24, an amount field 26 (sometimes referred to as a "courtesy amount field" which comprises numerals rather than words in most cases), a field 28 including the amount in words, a signature 30 and a MICR codeline 32.

The amount field 26 is of interest to some further processing of a document. Finding the amount as described in US Patent application, Serial No. 07/491897 entitled "Method and System for Locating an Amount Field on a Document", filed concurrently by T. A. Will which is useful in the present invention.

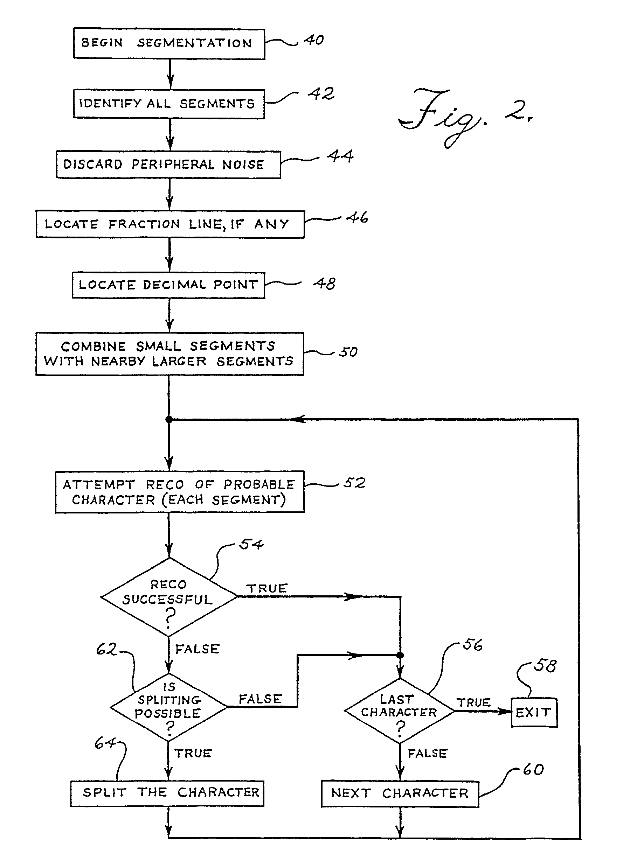

Figure 2 illustrates logic diagrams for implementing the segmentation of character images from the image capture and processing system of Figure 1. As such, each image was captured and stored in a conventional manner, which in its preferred embodiment is a disclosed in Dinan et al. U.S. Patent 4,888,812, but which may be any other similar digital image capture and storage system such as described in U.S. Patent 4,205,780 to Burns et al. A field of interest has been chosen for example as described in concurrently filed patent application, "Method and System for Locating an Amount Field on a Document", by T. A. Will. The teachings of both of these patents are specifically incorporated herein by reference.

Figure 2 illustrates the logic diagram of the segmentation techniques used in the present invention. The segmentation process begins at block 40, then each segment is identified at block 42. That is, by beginning at the left most black pel and moving rightward in a recursive process, each segment in which all black pels which are connected together are identified as belonging to a single segment, and, conversely, those which are not connected are identified as belonging to a different segment.

At Block 44, small, isolated segments are discarded from further consideration. This would include stray marks, background noise or other black regions which, from size and/or location, experience tells are not likely to represent a character (or portion thereof) or other meaningful indicia (like a decimal point or a fraction bar).

At block 46, a fraction bar is located and discarded, as is the matter (such as "100") which is located under the fraction bar or to the immediate right of the fraction bar. The fraction bar is either horizontal or is inclined either from lower left to the upper right or from upper left to lower right.

At block 48 the decimal point (if any) is located. In addition to dividing the dollars from cents, the decimal point generally does not separate one portion of a character from another, so the segmentation rules prohibit combining pieces from on both sides of the decimal point.

The segments identified at block 42 are classified into larger segments and smaller segments, and at block 50, starting with the largest segment, one or more smaller segment(s) which are adjacent to the large segment are combined, if possible, with the larger segment.

Then, using the combined segments, at block 52, a recognition algorithm attempts to recognize the character so segmented. This recognition algorithm could be any one of those available algorithms, as desired, but in the preferred embodiment, uses that described in the Recognition Patent. At block 54, then, if the recognition is successful, control passes to block 56 (where the question is whether that character is the last). From block 56, if it is the last, the system exits at block 58, otherwise moves to the next character at block 60, then returns to block 52.

If the recognition is not successful at block 54, then at block 62, the segment is tested to determine if it can be split conveniently and in a likely region. For example, if the segment includes two regions connected only by a narrow connection, this is a logical place to try to split the segment. Further, since handwriting typically is included or slanted approximately 26.5 degrees, then an attempt to divide the segment attempts to pass an inclined line therethrough which is inclined at 26.5 degrees.

If splitting a segment at block 62 was not possible then control passes to block 56, otherwise the segment is split at block 64, then control passes back to block 52.

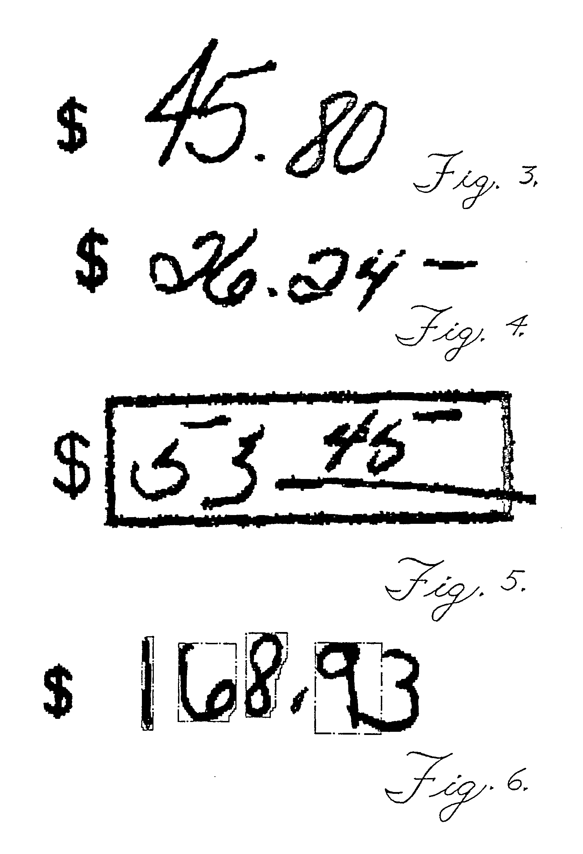

Figures 3 - 6 illustrate various amount fields from handwritten checks or other financial documents in which the amounts are segmented according to the logic of Figure 2.

Figure 3 illustrates a sample of the amount field derived from an image processing system of Figure 1. While it is apparent to the human eye that the amount is $45.80, this is because the eye inherently does segmenting and recognition. A machine recognition system, however, must be provided with stored rules and algorithms, and, for best results, should have a single character segmented out in order to allow recognition.

In this case, the "4" and "5" are connected by a narrow bridge, and an attempt to segment the combined 4 and 5 segment requires the separation. The characters are written with an incline with the tops of the character rightward of the bottom. An attempt to segment along a 26.5° incline would find a narrow neck between the "4" and the "5". Once the "4" and "5" are split, each can be recognized easily.

Figure 4 illustrates an amount field of $26.24. The first "2" includes a gap in the loop as imaged, and the "2" and "6" are connected. Further, the "4" includes a gap in the vertical strokes, something which frequently occurs because the vertical strokes are penned with less pressure and perhaps more speed. The small ends above the gaps in the "4" are combined with the rest of the "4" (the large segment) (of course, depending on the recognition algorithm, the large segment without the small ends is likely to be successfully recognized without the combination). This figure also includes a trailing hyphen, which is discarded from further consideration when recognized.

Figure 5 illustrates the amount $53.45 with each of the 5's formed with the top horizontal bar being separate from the rest of the character. The amount is within a box and includes a fraction bar.

Figure 6 illustrates the amount $168.93 with the "9" and "3" connected, and each character is in the box resulting from the segmentation process.

## Claims

1. A method of segmenting character images in an optical recognition system, the steps of the method comprising:

   identifying (40) contiguous black areas of image as a segment;

   attempting (42) to recognize the pattern from such contiguous black areas using stored recognition algorithms;

   working with the larger segments, combining (50) smaller adjacent segments with the larger adjacent segment into a pattern for recognition according to a set of rules;

   if the step of attempting to recognize (52) is not successful, then attempting to divide (62) a pattern into a smaller region for recognition if the segmenting has been unsuccessful at recognizing a character the dividing also according to a set of rules; and

repeating the process of attempting to recognize the character and dividing it if recognition is not successful.

2. A method of segmenting a character image including the steps of Claim 1, where the step of attempting to recognize a character image further includes the step of attempting to recognize a pair of connected zeros as a symbol in the image.

3. A method of segmenting a character of the type described in Claim 1, wherein the method further includes the step of discarding a section of the image which is recognized as being unnecessary for the recognition of that image.

4. A method of segmenting an image including the steps of Claim 3 wherein the step of discarding includes discarding (46) a fraction bar.

5. A method of segmenting an image including the steps of Claim 4, further including the step of discarding the written portion which is beneath the fraction bar.

6. A method of segmenting an image including the steps of Claim 1 wherein the step of dividing the image includes creating an artificial separating line which is drawn through the image along a line with a relatively few black pels.

7. A method of segmenting an image including the steps of Claim 1 wherein the step of dividing includes the step of using a line which is inclined about 26.5° to the upper right of a vertical line.

*Fig. 1.*

*Fig. 2.*

```
        ┌─────────────────────┐
        │  BEGIN SEGMENTATION │ ─── 40
        └─────────────────────┘
                   │
                   ▼
        ┌─────────────────────┐
        │ IDENTIFY ALL SEGMENTS│ ─── 42
        └─────────────────────┘
                   │
                   ▼
        ┌─────────────────────┐
        │ DISCARD PERIPHERAL NOISE │ ─── 44
        └─────────────────────┘
                   │
                   ▼
        ┌────────────────────────┐
        │ LOCATE FRACTION LINE, IF ANY │ ─── 46
        └────────────────────────┘
                   │
                   ▼
        ┌─────────────────────┐
        │ LOCATE DECIMAL POINT │ ─── 48
        └─────────────────────┘
                   │
                   ▼
        ┌──────────────────────────┐
        │  COMBINE SMALL SEGMENTS   │ ─── 50
        │ WITH NEARBY LARGER SEGMENTS│
        └──────────────────────────┘
                   │
                   ▼
        ┌────────────────────────────┐
        │ ATTEMPT RECO OF PROBABLE    │ ─── 52
        │ CHARACTER (EACH SEGMENT)    │
        └────────────────────────────┘
                   │
                   ▼
              ╱─────────╲
             ╱   RECO     ╲  ─── 54
            ╱ SUCCESSFUL   ╲── TRUE ──►
            ╲      ?       ╱
             ╲           ╱
              ╲─────────╱
                   │ FALSE
                   ▼
              ╱─────────╲
    62 ──   ╱    IS      ╲
           ╱  SPLITTING   ╲── FALSE ──►
           ╲  POSSIBLE    ╱
            ╲     ?      ╱
             ╲─────────╱
                   │ TRUE
                   ▼
        ┌─────────────────────┐
  64 ── │  SPLIT THE CHARACTER │
        └─────────────────────┘

              ╱─────────╲
             ╱   LAST    ╲  ─── 56
            ╱ CHARACTER   ╲── TRUE ──►  ┌──────┐
            ╲     ?       ╱             │ EXIT │ ─── 58
             ╲           ╱              └──────┘
              ╲─────────╱
                   │ FALSE
                   ▼
        ┌─────────────────────┐
        │  NEXT CHARACTER      │ ─── 60
        └─────────────────────┘
```

$ 45.80

*Fig. 3.*

$ 26.24 —

*Fig. 4.*

$ 53 45

*Fig. 5.*

$ 168.93

*Fig. 6.*